**Europäisches Patentamt**

**European Patent Office**

**Office européen des brevets**

(19)

(11) Veröffentlichungsnummer : **0 062 267**
**B1**

(12) **EUROPÄISCHE PATENTSCHRIFT**

(45) Veröffentlichungstag der Patentschrift :
26.06.85

(21) Anmeldenummer : 82102595.4

(22) Anmeldetag : 27.03.82

(51) Int. Cl.⁴ : **B 23 Q   7/14**, B 65 G  35/06,
B 65 G  37/02

(54) Fertigungs- oder Montagesystem.

(30) Priorität : 31.03.81 DE 3112911

(43) Veröffentlichungstag der Anmeldung :
13.10.82 Patentblatt 82/41

(45) Bekanntmachung des Hinweises auf die Patenterteilung : 26.06.85 Patentblatt 85/26

(84) Benannte Vertragsstaaten :
AT BE CH DE FR GB IT LI LU NL SE

(56) Entgegenhaltungen :
DE-A- 2 100 842
DE-A- 2 856 109
DE-B- 1 246 558
DE-B- 1 273 415
DE-C-    542 820
GB-A-    103 514
GB-A- 2 010 138

(73) Patentinhaber : **Fritz, Hans-Ulrich, Dipl.-Ing.**
**Am Wolfsberg 10**
**D-7000 Stuttgart 70 (DE)**

(72) Erfinder : **Fritz, Hans-Ulrich**
**Am Wolfsberg 10**
**D-7000 Stuttgart 70 (DE)**

(74) Vertreter : **Patentanwälte Ruff und Beier**
**Neckarstrasse 50**
**D-7000 Stuttgart 1 (DE)**

## Beschreibung

Die Erfindung betrifft ein Fertigungs- oder Montagesystem mit Transporteinrichtunen, die Werkstückträger für darauf anzuordnende Werkstücke mittels an dem Werkstückträger angreifen der Antriebsorgane durch die einzelnen Stationen des Systems transportieren, wobei das System aus mehreren, gegebenenfalls unterschiedlichen Systemeinheiten (11-16) mit wenigstens je einer unabhängig und gesteuert antreibbaren Antriebseinheit (17, 17a, b) besteht.

Aus der Firmenzeitschrift « BOSCH-AKTUELL » Nr. 7 vom Sept. 1980, ist ein Montagesystem bekanntgeworden, bei dem Werkstückträger durch die einzelnen Montagestationen mittels eines Doppelgurt-Montagebandes transportiert werden, auf dem sie aufliegen und durch Reibung mitgenommen werden. In den Montagestationen werden sie durch Anschläge angehalten. Band und Werkstückträger sind einem Verschleiß ausgesetzt, und das System ist wenig flexibel, weil eine Zwischenschaltung von Montagestationen oder eine Verlängerung des Bandes nicht ohne weiteres möglich ist, ohne daß das gesamte Band ausgetauscht wird.

Es ist ferner aus der GB-A-2 010 138, ein System bekannt geworden, bei dem der Antrieb der Werkstückträger durch angetriebene jeweils mit einer Rutschkupplung versehene Reibrollen erfolgt. Bei diesem System ist die Flexibilität größer, jedoch ist die Führung nicht ideal und der Verschleiß ebenfalls erheblich.

Es ist ferner aus der DE-OS 28 56 109 ein Bestückungstisch bekannt geworden, bei dem Behälter für die zu verarbeitenden Bauteile eine auf der Unterseite in Längsrichtung verlaufende Zahnstange aufweisen, die mit einem Zahnrad am Bestückungstisch zusammenwirkt, um den Behälter längs zu verschieben. Auf diese Weise können die einzelnen Behälter auf einem sehr begrenzten Raum längs und durch andere Transportmittel quer hin- und herverschoben werden. Bei diesem Bestückungstisch liegen jedoch ganz andere Verhältnisse als bei einem Montagesystem vor, bei dem es um einen Längstransport mit genauer Positioniermöglichkeit geht.

Aufgabe der Erfindung ist es, ein Montagesystem der eingangs erwähnten Art zu schaffen, das bei idealer Anpassungsmöglichkeit an unterschiedliche Erfordernisse einen einfachen Aufbau, störungsfreien Transport und genaue Positionierung ermöglicht.

Diese Aufgabe wird erfindungsgemäß dadurch gelöst, daß die Werkstrückträger in ihrer Längsrichtung verlaufende Eingriffselemente und die Antriebseinheiten darin formschlüssig eingreifende, umlaufende Antriebsorgane aufweisen, daß die Werkstückträger auf von dem Antrieb unabhängigen Führungen geführt sind und daß wenigstens eines der Antriebsorgane eine in Transportrichtung wirksame Freilauf-Einrichtung hat.

Die einzelnen Einheiten brauchen vorzugsweise keine mechanische Antriebsverbindung miteinander zu haben und können somit mit einfachen elektrischen Kraft- und Steuerkabeln hintereinander gekoppelt werden. Die Werkstückträger, deren Länge vorzugsweise größer ist als die halbe Länge einer Einheit, werden durch die Antriebsorgane für jeden einzelnen Werkstückträger genau gesteuert transportiert und können an beliebigen Stellen mit recht guter Positionierung mit einer Genauigkeit unter einem Millimeter gestoppt werden. Dazu ist es auch möglich, durch mechanische oder berührungslose Fühler den Antrieb so zu steuern, daß bei Annäherung an' die gewünschte Position der Antrieb zuerst von einem Eilgang auf einen Schleichgang heruntergeschaltet und dann mit guter Positionsiergenauigkeit angehalten wird.

Die Werkstückträger laufen auf vom Antrieb unabhängigen Führungen, vorzugsweise auf einfachen L-förmigen Schienen, was den Aufbau sehr einfach macht und dafür sorgt, daß während der Bearbeitung der Antrieb selbst nicht von auf das Werkstück bzw. den Werkstückträger ausgeübten Kräften beeinflußt wird, wie dies bei vom Antrieb getragenen Werkstückträgern der Fall wäre. Die Freilauf-Einrichtung, die als richtungsabhängiger automatischer Freilauf oder als schaltbare Kupplung ausgebildet sein kann, sorgt bei den damit versehenen Einheiten dafür, daß ohne genaue Synchronisierung der Transportgeschwindigkeiten eine reibungslose Übergabe von dem Antrieb einer Einheit zu dem der nächsten möglich ist. Es ist auch möglich, eine beispielsweise zwischen zwei Montagestationen vorgesehene Transporteinheit als Kurzzeit-Speicher zu benutzen. Die vorige Montagestation schiebt dann den Werkstückträger, wegen der Freilauf-Einrichtung ˙ unbehindert, auf die Transporteinheit, und der Antrieb ist damit in einschaltbereitem Zustand, wird jedoch erst dann betätigt, wenn die folgende Montagestation aufnahmebereit ist.

Jede Antriebseinheit kann vorzugsweise einen eigenen Niederspannungs-Getriebemotor haben, und zwar insbesondere einen Kraftfahrzeug-Scheibenwischermotor. Diese robusten, in Großserie hergestellten Elektromotoren können verwendet werden, weil das Montagesystem keine Zwangssynchronisation zwischen den einzelnen Einheiten benötigt. Die Verwendung von Niederspannung, beispielsweise 24 Volt Gleichstrom, die die Verwendung von Lastwagen-Scheibenwischermotoren und Steuerrelais ermöglicht, macht darüberhinaus die Installation sicherer und benötigt wegen der relativ geringen Antriebsleistung auch keine ungewöhnlichen Leitungsquerschnitte.

Vorzugsweise ist zum Erzielen großer Positioniergenauigkeit der Antrieb formschlüssig. Dabei können die Antriebsorgane Zahnräder und die Eingriffselemente Zahnstangen sein, die an den Seiten der Werkstückträger angeordnet oder in diese eingeformt sind. Es wäre jedoch hier auch möglich, andere formschlüssige Antriebselemente zu verwenden, beispielsweise in eine Lochschiene eingreifende Stifträder oder ketten- und zahnriemenähnliche Antriebe.

Die Werkstückträger können, insbesondere wenn sie quadratisch oder nahezu quadratisch sind, an allen vier Seiten Zahnstangen haben, die es ermöglichen, den Werkstückträger wahlweise und ohne Schwenkung in zwei verschiedenen Richtungen zu bewegen. Sie laufen vorzugsweise auf Laufkörpern, die vorzugsweise an den Werkzeugträgern angebrachte Rollen sind. Dabei sind die Rollen so angeordnet, daß jeweils nur die in der betreffenden Laufrichtung wirksamen auf den Führungsschienen aufliegen, während die anderen in einer beispielsweise dazwischenliegenden Vertiefung eine ungehinderte Bewegung ermöglichen. Um eine einwandfreie seitliche Führung zu gewährleisten, sind vorzugsweise ebenfalls Rollen vorgesehen, die eine vertikale Achse haben und vorzugsweise in den vier Ecken des Werkstückträgers angebracht sind und über diese Ecken etwas hinausragen, so daß sie ebenfalls in beiden Transportrichtungen des Werkstückträgers wirksam sind.

Insbesondere in Montagestationen mit genauerer Positioniermöglichkeit werden als Antriebsorgane zwei in einem Abstand angeordnete, zueinander synchron angetriebene Zahnräder verwendet, so daß sie beide in eine Zahnstange eingreifen können. Eines hat eine betätigbare Kupplung und ein anderes einen Freilauf, wodurch eine besonders gute und störungsfreie Übergabe der Werkstückträger von Einheit zu Einheit erreicht wird.

Für eine sehr genaue Positionierung in der Größenordnung von hundertstel Millimetern ist vorzugsweise eine vom Antrieb unabhängige Indexiereinrichtung für den Werkstückträger vorgesehen. Sie besitzt ein Indexierelement, z. B. in Form eines Zahnstangenstücks, das in die seitlichen Transport-Zahnstangen des Werkstückträgers eingreifen kann. Durch diese Indexierung ist das System besonders leicht unterschiedlichen Werkstücken anzupassen, weil die Indexierteilung gleich der Zahnstangenteilung ist. Bei Anordnung mehrerer Werkstücke auf einem Werkstückträger oder mehreren Bearbeitungsstops können also Werkstückträger in genauen Arbeitspositionen an mehreren Stellen, ggf. auch mit unterschiedlicher Schrittgröße, angehalten werden. Die zur Steuerung des Werkstückträgers verwendeten Positionsdaten kann ein Fühler liefern, der vorzugsweise berührungslos, z. B. induktiv, die Zähne der Eingriffselemente des Werkstückträgers zählt.

Um die Transportrichtung ändern zu können, können Eckeinheiten vorgesehen sein, die zwei zueinander unter einem vorzugsweise rechten Winkel stehende Schienenpaare aufweisen, von denen wenigstens je eine Schiene anheb- oder absenkbar ist. Im Zusammenwirken mit den auf allen vier Seiten mit Zahnstangen versehenen Werkstückträgern kann also die Transportrichtung des Werkzeugträgers darin rechtwinklig umgelenkt werden, ohne daß der Werkstückträger selbst geschwenkt zu werden braucht. Nach Einfahren in die Eckstation wird die die Ausfahrt blockierende, in der früheren Transportrichtung verlaufende Schiene abgesenkt und die vorher abgesenkte Schiene für die Folge-Transportrichtung angehoben. Vorzugsweise kann die Eckeinheit auch als Bearbeitungsstation verwendet werden. Um die beiden Außenseiten der Eckstation frei zugänglich zu halten, kann der Antrieb und gegebenenfalls die Indexierung auf den Ein- und Ausfahrseiten vorgesehen sein und ist dementsprechend absenkbar angeordnet. Die beschriebene Ausführung eignet sich besonders für etwa quadratische Werkstückträger. Bei langgestreckten Werkstückträgern ist eine Schwenkung um eine vertikale Achse sinnvoll.

Zur Erhöhung der Flexibilität des Montagevorganges können Puffereinheiten vorgesehen sein. Sie ermöglichen es, die einzelnen Montagestationen soweit voneinander zu entkoppeln, daß Störungen an Montageeinrichtungen oder kurzzeitige Pausen der Montagepersonen ohne Behinderung des Gesamtablaufes möglich sind. Die Puffereinheiten können wenigstens zwei zueinander parallele Führungsbahnen mit Antriebseinheiten jeweils am Eingang und am Ausgang der Bahnen besitzen und eine Verschiebeeinrichtung für die Werkstückträger von der ersten zur zweiten Führungsbahn. Zur Vergrößerung der Pufferkapazität könnten weitere parallele Führungsbahnen auf der Eingangs- oder Ausgangsseite angeordnet sein, für die ebenfalls Verschiebeeinrichtungen vorgesehen sind. Somit könnte die Pufferstation im Baukastensystem den jeweils erforderlichen Speicherkapazitäten angepaßt werden. Es ist auch möglich, eine solche Puffereinheit zur Verzweigung zu verwenden, indem eine Einheit einer abzweigenden Linie am Ausgang der ersten Führungsbahn angeschlossen ist, wo sie dann ggf. von einem gesonderten Antrieb bei Vorliegen eines Verzweigungsbefehls linear durchtransportiert wird.

Besonders vorteilhaft ist eine U-förmig Anordnung des gesamten Montagesystems, weil dann das Be- und Entladen der Werkstückträger mit den Werkstücken bzw. den Basisteilen, von denen die Montage ausgeht, von einem einzigen Industrieroboter vorgenommen werden kann, der zwischen Be- und Entladestation steht und auch die Werkstückträger von der Entlade- zur Beladestation umsetzt. Andererseits ist es aber auch möglich, bei Verwendung anderer Entlade- und Belademöglichkeiten das Montagesystem im wesentlichen geschlossen anzuordnen oder, bei geradliniger Anordnung, die Werkstückträger mit einem anderen Transportmittel parallel an die Ausgangsstelle zurückzuführen.

Bevorzugte Ausführungsbeispiele der Erfindung sind in den Zeichnungen dargestellt und werden im folgenden näher erläutert. Es zeigen:

Figur 1 eine schematische Draufsicht auf ein Ausführungsbeispiel eines Montagesystems,

Figur 2 eine Seitenansicht eines Werkstückträgers,

Figur 3 eine Unteransicht des Werkstückträgers,

Figur 4 eine Unteransicht eines anderen Werkstückträgers,

Figur 5 einen Detail-Schnitt durch den Werkstückträger nach Fig. 4 und eine Führungsschiene.

Figuren 6 und 7 eine Draufsicht auf eine Antriebseinheit und ein Detail von Führungsbahn und Werkstückträger in zwei Arbeitsstellungen, entsprechend der Linie VI-VII in Fig. 8 teilgeschnitten,

Figur 8 eine Seitenansicht einer Antriebseinheit mit Details der Führungsbahn und des Werkstückträgers,

Figur 9 einen Querschnitt durch eine Indexiereinheit,

Figur 10 eine Draufsicht auf einen Abschnitt des Systems,

Figur 11 eine nach der Linie XI-XI in Fig. 12 teilgeschnittene Ansicht einer Puffereinheit,

Figur 12 einen Schnitt nach der Linie XII-XII in Fig. 11,

Figur 13 einen Teilschnitt durch eine Schwenkeinheit,

Figur 14 eine schematische Draufsicht auf ein weiteres Ausführungsbeispiel eines Montagesystems,

Figur 15 eine schematische Draufsicht auf ein Montagesystem mit einer Rückführstrecke für die Werkstückträger,

Figur 16 die Draufsicht auf eine Eckeinheit,

Figur 17 eine Seitenansicht einer Kippeinheit,

Figur 18 ein teilgeschnittenes Detail an einem Werkstückträger und

Figur 19 eine teilgeschnittene Seitenansicht eines Werkstückträgermagazins.

In den Zeichnungen tragen gleiche Teile gleiche Bezugszeichen und ähnliche oder vergleichbare Teile gleiche Bezugszeichen mit kleinen Buchstaben als Indizes. Soweit ihre wesentliche Gestaltung und Funktion gleich ist, wird jeweils auf die Wiederholung ihrer Beschreibung verzichtet.

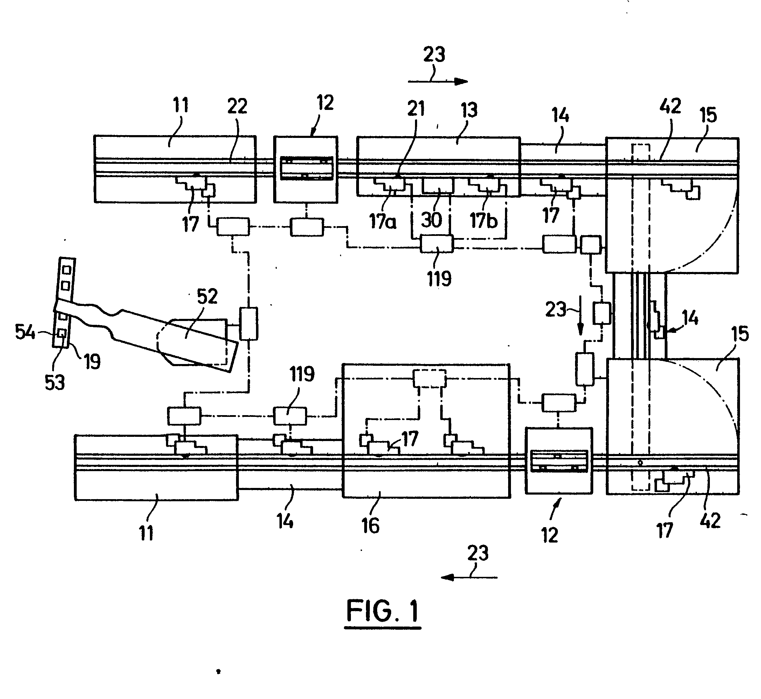

Das in Fig. 1 dargestellte System dient zur Vornahme von Arbeitsgängen, insbesondere von Fertigungs- und/oder Montagearbeitsgängen an Werkstücken 53, von denen jeweils mehrere mittels Werkstückaufnahmen 54 auf einem Werkstückträger 19 aufgenommen sind. Die gesamte Anordnung des Montagesystems ist U-förmig, d. h. die am Eingang befindliche Beladestation 11 befindet sich gegenüber der am Ausgang der Montagelinie befindlichen, im wesentlichen identisch ausgebildeten Entladestation 11.

Ein sogenannter Industrieroboter 52, d. h. ein Gerät, das programmgesteuert handarbeitsähnliche Tätigkeiten vornehmen kann, ist zwischen Be- und Entladeeinheit aufgestellt, entnimmt die Werkstücke 53 vom Werkstückträger 19 und setzt diesen auf die Führungsbahn 22 der Beladestation 11. Er kann auch den Werkstückträger mit neuen Basis-Werkstückteilen beladen.

Durch einen Antrieb 21 wird der Werkstückträger jeweils gradlinig über eine Pufferstation 12 in eine Indexierstation 13 und über eine Transporteinheit 14 in eine Schwenkeinheit 15 transportiert, dort um 90° geschwenkt und über eine Transporteinheit 14, eine weitere Schwenkeinheit 15 und eine weitere Puffereinheit 12 in eine Arbeitsstation 16 für überwiegend manuelle Arbeitsvorgänge befördert und schließlich über eine Transporteinheit 14 in die Entladeeinheit 11.

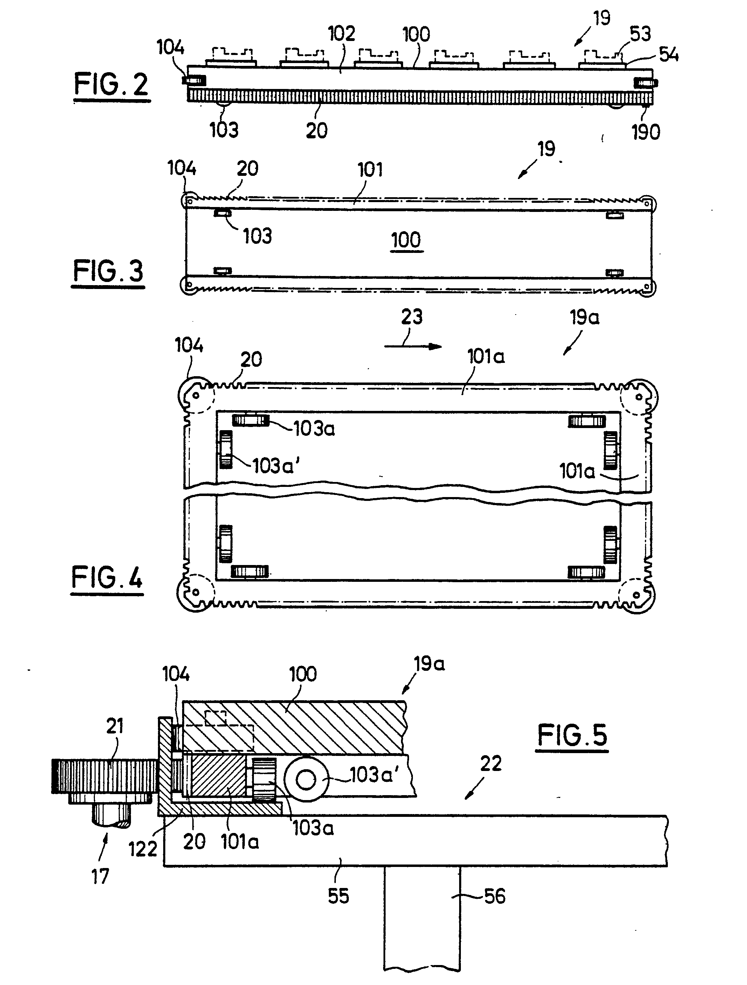

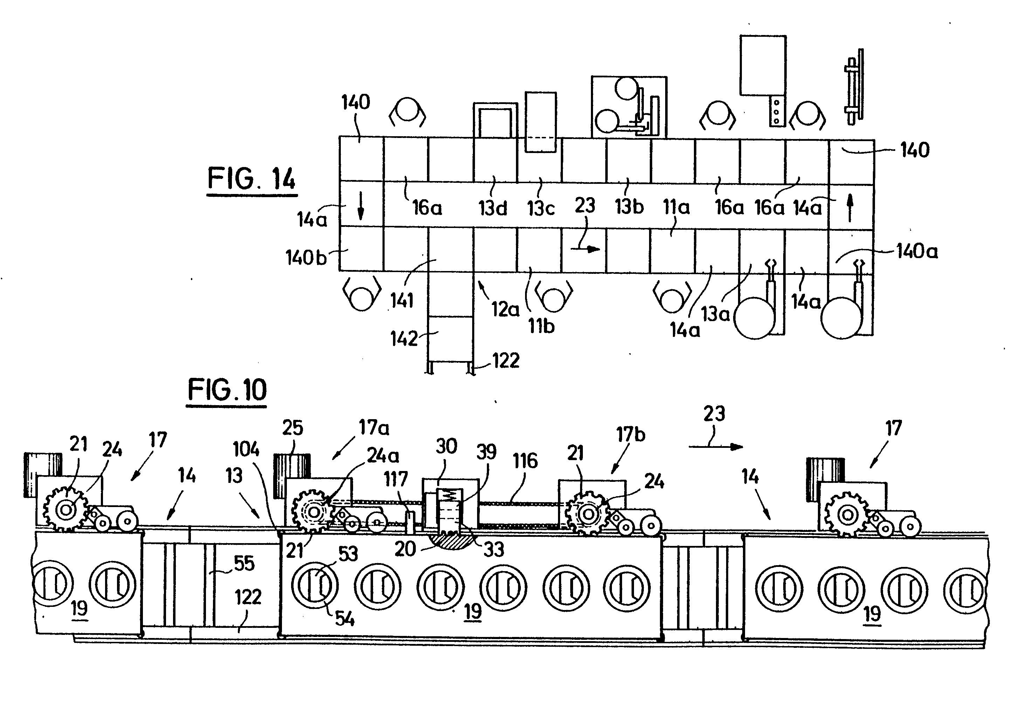

In Fig. 2 und 3 ist ein Werkstückträger 19 dargestellt, der eine langgestreckt rechteckige Form hat und aus einem plattenförmigen Basisteil 100 aus Kunststoff oder Aluminiumguß besteht, an dessen Oberseite ggf. mehrere Werkstückaufnahmen angeordnet sind (in Fig. 10 als kreisförmige Werkstückaufnahmen 54 gezeichnet). An der Unterseite des Basisteils 100 sind an den Längskanten Zahnstangen 101 angeordnet, deren Verzahnung 20 Eingriffselemente für den Antrieb darstellt. Diese Zahnstangen können je nach den Anforderungen aus Metall oder Kunststoff bestehen. Sie sind normalerweise so angeordnet, daß sie über den eine Lauffläche bildenden Seitenteilen 102 des Basisteils nicht vorstehen.

An der Innenseite der Zahnstangen ist mit etwas Abstand von den Ecken des Werkstückträgers 19 je eine Laufrolle 103 angeordnet, die etwas über die Unterseite der Zahnstange vorsteht und deren Laufrichtung mit der Längsrichtung des Werkstückträgers übereinstimmt. Im Basisteil sind an den vier Ecken des Werkstückträgers 19 Aussparungen vorgesehen, in denen je eine Führungsrolle 104 mit vertikaler Achse so angeordnet ist, daß sie in Längs- und Querrichtung über die äußere Begrenzung des Werkstückträgers vorsteht.

Der in Fig. 4 dargestellte Werkstückträger ist, obwohl er verkürzt dargestellt ist, quadratisch und im Unterschied zu Fig. 2 und 3 an allen vier Seiten mit Zahnstangen 101a versehen. Dementsprechend sind auch an jeder Ecke zwei Laufrollen 103a und 103a' mit horizontaler Achse vorgesehen, von denen je eine zu den um 90° gegeneinander versetzten Laufrichtungen des Werkstückträgers 19a gehört. Aus Fig. 5 ist zu erkennen, daß die Rollen 103a und 103a' so angeordnet sind, daß jeweils die in der entsprechenden Laufrichtung wirksame Laufrolle (hier 103a) näher an der in Transportrichtung 23 (in Fig. 5 senkrecht zur Zeichenebene) verlaufenden Seitenkante liegt als die andere Laufrolle 103a. Somit läuft die Laufrolle 103a auf einer L-Schiene 122, ohne daß die Rolle 103a' dabei stört. Die Führungsbahn 22 besteht aus zwei L-förmigen Schienen 122, deren vertikaler Schenkel eine Lauffläche für die Führungsrollen 104 bilden. Ein zur Antriebseinheit 17 gehörendes Zahnrad 21 greift durch eine Ausnehmung in dem vertikalen Schenkel der Schiene 122 hindurch in die Verzahnung 20 ein.

Während der Werkstückträger nach Fig. 2 und 3 für langgestreckte Werkstücke und/oder mehrere in Längsrichtung hintereinander angeordnete kleinere Werkstücke geeignet ist, ist der Werkstückträger nach Fig. 4 sowohl für große, sperrige Werkstücke oder verknüpfe Baugruppen als auch für Einzelwerkstücke geeignet. Er bietet die Möglichkeit des Transportes in zwei aufeinander senkrecht stehenden Richtungen und ist daher in einem Gesamtsystem noch universeller einzusetzen.

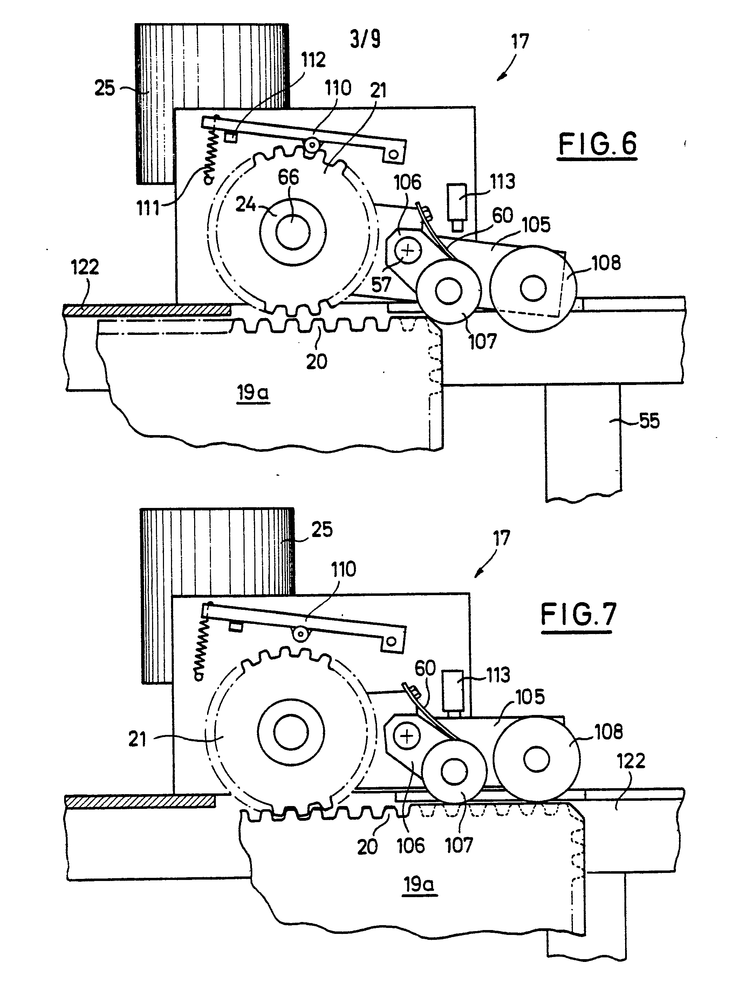

In Fig. 6 bis 8 ist eine Antriebseinheit 17 dargestellt, die zusammen mit ihrem Antrieb als kompakte vormontierte Einheit an einer Führungsschiene 122 montiert werden kann.

Sie besitzt einen Getriebemotor 25, der an einer Schwenkplatte 105 montiert ist und über eine Welle 66 und einen zwischengeschalteten Freilauf 24 das Antriebszahnrad 21 antriebt. Die Schwenkplatte 105 ist um eine an einem Grundrahmen 58 vorgesehene vertikale Schwenkachse 57 schwenkbar, um die auch ein einarmiger Hebel 106 gegen die Kraft einer Blattfeder 60 schwenkbar ist. Am freien Ende des Hebels 106 ist eine Vorspannrolle 107 gelagert, und benachbart dazu ist am dem Zahnrad 21 gegenüberliegenden Ende der Schwenkplatte 105 eine Verriegelungsrolle 108 gelagert. Die Rollen 107, 108 und das Zahnrad 21 greifen durch Ausschnitte 109 in der Führungsschiene 122 hindurch. Das Zahnrad greift in die Verzahnung 20 ein, und die Rollen laufen auf der Lauffläche 102 außerhalb der Bahn, der Führungsrollen 104. An den Umfang des Zahnrades 21 angrenzend ist eine Bremseinrichtung 110 vorgesehen, das eine an einem schwenkbaren Hebel befestigte Rolle aufweist, die durch eine Feder 111 in Richtung auf das Antriebszahnrad 21 belastet ist, jedoch durch einen Anschlag 112 in einer Position gehalten wird, in der die Bremseinrichtung die Drehung des Zahnrades 21 nur in der Lage behindert, in der est nicht in die Verzahnung 20 des Werkstückträgers eingreift.

Diese Lage ist aus Fig. 6 zu ersehen. Der gerade von einer anderen Antriebseinheit geschobene Werkstückträger läuft mit seiner Vorderkante in den Bereich der Antriebseinheit 17 ein. Durch die Blattfeder 60 sind Hebel 106 und Schwenkplatte 105 im Uhrzeigersinn verschwenkt, so daß die Rollen 107, 108 in die Bahn des Werkstückträgers 19a hineinragen, während das Zahnrad 21 außer Eingriff verschwenkt ist. Wenn (Fig. 6) die Vorspannrolle 107 mit der Vorderkante des Werkstückträgers 19a in Eingriff kommt, wird sie entgegen dem Uhrzeigersinn zurückverschwenkt und übt dabei auch auf die Schwenkplatte 105 eine Kraft aus, die das Zahnrad 21 in Richtung auf die Zahnstange drückt. Wenn die Zähne dabei sofort ineinander eingrefen, ist die Antriebsverbindung bereits damit hergestellt. Wenn jedoch, wie in Fig. 6 dargestellt, Zahn auf Zahn kommt, dann bleibt die Vorpsannung so lange bestehen, bis ein Eingriff hergestellt ist. Durch die Bremsung des Zahnrades 21 mit der Bremseinrichtung 110 wird sichergestellt, daß es zu einer Relativbewegung zwischen den Zähnen kommt und diese nicht Scheitel auf Scheitel abrollen. Dieser Eingriff ist mit Sicherheit während des Laufes der Werkstückträgervorderkante zwischen Rollen 107 und 108 hergestellt. Die Verriegelungsrolle 108 verwandelt dann den kraftschlüssigen Eingriff über die Vorspannrolle 107 in einen formschlüssigen Eingriff, in dem die eingreifenden Zähne genau zueinander positioniert sind. In dieser Lage wird ein Schalter 113 betätigt, der das Einschaltsignal bzw. die Einschaltfreigabe für den Motor 25 abgibt. Die Bremseinrichtung 110 greift nicht mehr in das Zahnrad 21 ein.

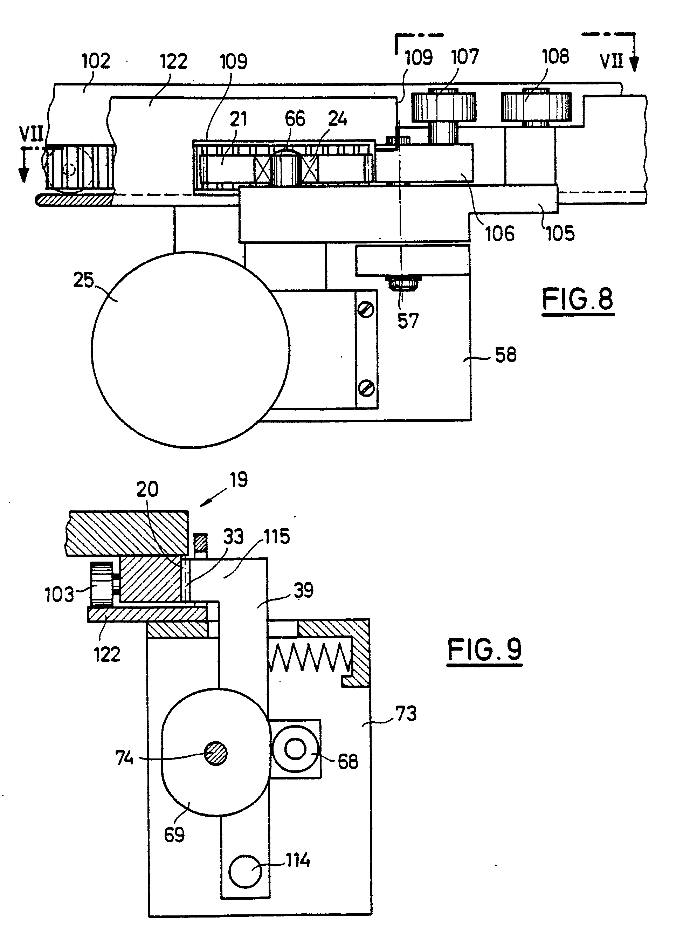

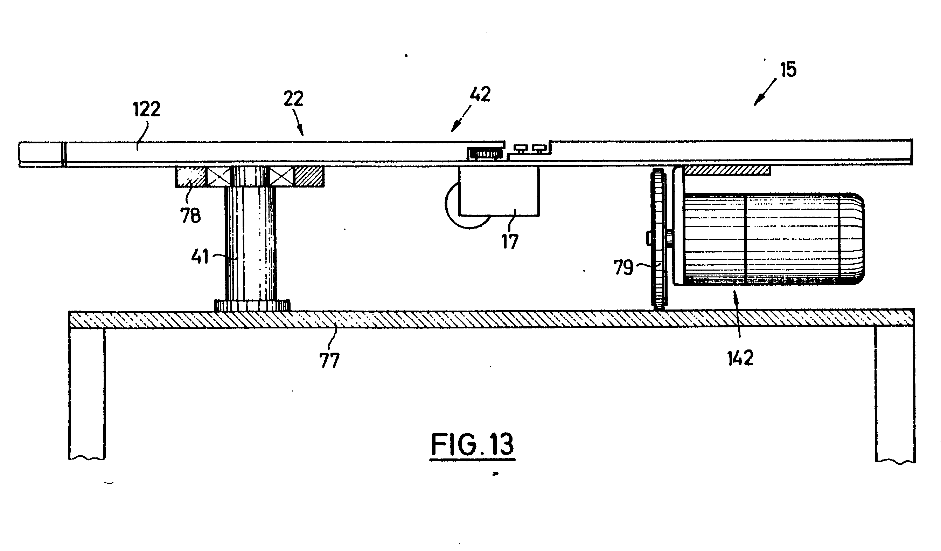

Fig. 9 zeigt eine Indexiereinrichtung 30, deren Rahmen 73 ebenfalls in einer Führungsschiene 122 befestigt ist und die Schwenkachse 114 eines Indexierhebels 39 trägt, der an seinem oberen freien Ende einen Vorsprung 115 mit einem Zahnstangenstück 33 aufweist, das bei Schwenkung des Hebels 39 in Eingriff mit der Verzahnung 20 des Werkstückträgers 19 kommen kann. Statt eines Zahnstangenstückes mit mehreren Zähnen könnte auch ein einzelner Zahn, eine Leiste oder ein ähnliches Indexierelement verwendet werden.

Der Indexierhebel 39 wird von einer Kurvenscheibe 69 gesteuert, an deren Achse 74 ein nicht dargestellter Getriebemotor angeschlossen ist, der jeweils in Schritten von einer Viertelumdrehung antreibbar ist. Auf der Kurvenscheibe 69 läuft eine Mitnehmerrolle 68, die den Indexierhebel 39 aus dem Eingriff mit der Verzahnung 20 entgegen der Kraft einer Feder 115 zurückdrücken kann. Die Indexierung erfolgt also kraftschlüssig unter Einwirkung der Feder 115.

In Fig. 10 ist ein Abschnitt des Montagesystems dargestellt, das eine Indexierstation 13 und zwei Transporteinheiten 14 bzw. in Bezug auf den Antrieb gleich ausgebildete Arbeitsstationen für manuelle Arbeit enthält. Die Transporteinheiten 14 besitzen jeweils eine Antriebseinheit 17, während die Indexierstation 13 eine doppelte Antriebseinheit aufweist, die aus einer Antriebseinheit 17a besteht, die über eine Kette 116, einen Zahnriemen oder dgl. mit einer Antriebseinheit 17b verbunden ist. Die Antriebseinheit 17a bersitzt statt des Freilaufs 24 (Fig. 8) eine mit einem strichlierten Kreis angedeutete schaltbare Kupplung 24a, und die Antriebseinheit 17b ist statt durch einen Motor 25 nur durch die Kette 116 von der Einheit 17a aus angetrieben.

Mittig zwischen den Antriebseinheiten 17a, 17b ist eine Indexiereinheit 30 an der gleichen Führungsschiene 122 angebracht.

Jede Einheit bzw. Station 11 bis 16 besteht aus jeweils zwei zueinander parallelen Führungsschienen 122, diese verbindenden Querträgern 55 und diese tragenden Stützen 56 (Fig. 5). Die einzelnen Einheiten naben voneinander getrennte Antriebe und keine mechanischen Antriebsteile, die von einer Einheit bzw. Station zur anderen herüberreichen. Sie können daher wie Tische oder Bänke hintereinander gestellt werden und sind lediglich durch elektrische Leitungen miteinander zu verbinden. Sie daher besonders leicht unterschiedlichen Gegebenenheiten anzupassen und umzurüsten. Der Transport der Werkstückträger 19 von Station zu Station wird anhand von Fig. 10 erläutert. Die Stationen 14 besitzen nur jeweils eine Antriebeinheit 17, während die Indexierstation 13 einen Doppelantrieb 17a, b hat. Die Werkzeugträger 19 sind jedenfalls so lang, daß sie von einem Antriebszahnrad 21 zum anderen reichen. Es kann aber auch vorteilhaft sein, einen Doppelantrieb 17a, 17b vorzusehen, auch wenn die Anordnung eines einzelnen Antriebes aufgrund der Werkzeugträgerlänge ausreichen würde.

Wenn beispielsweise der in Fig. 10 in der Mitte dargestellte Werkstückträger 19 in Transportrichtung 23 abtransportiert werden soll, so wird der Antrieb 17 der rechten Transporteinheit und der Antrieb 17a, 17b in Betrieb gesetzt. Dabei wird jedoch die Kupplung 24a nicht betätigt, so daß der Motor 25 nur die Antriebseinheit 17b wirksam antreibt. Der Indexierhebel 39 war vorher zurückgeschwenkt und das Indexierorgan (Zahnstangenstück 33) außer Eingriff gebracht worden. Damit wandern der rechte und der mittlere Werkstückträger in Transportrichtung ab. Wenn der mittlere Werkstückträger den rechten Antrieb 17 erreicht, wird er von diesem übernommen, nachdem er in der anhand von Fig. 6 und 7 beschriebenen Weise in Eingriff gekommen ist. Eine eventuell durch den unabhängigen Antrieb unterschiedliche Antriebsgeschwindigkeit der nun beide in Eingriff befindlichen Zahnräder 21 wird dadurch ausgeglichen, daß einer der Freiläufe der Einheiten 17 bzw. 17b anspricht, je nachdem welche der beiden Transportgeschwindigkeiten höher ist. Jeweils beim langsameren Antrieb « überholt » das Zahnrad seine Antriebswelle.

Gleichzeitig konnte auch die linke Antriebseinheit 17 eingeschaltet werden, und der linke Werkzeugträger 19 wird von der Transporteinheit 14 auf die Indexiereinheit 13 überführt und läuft in die Einheit 17a ein, immer noch von der linken Antriebseinheit 17 geschoben. Nach dem Ineingriffbringen des Zahnrades signalisiert der Endschalter 113 (Fig. 6 und 7) die Betriebsbereitschaft, und die Kupplung 24a wird geschlossen, so daß jetzt der Antrieb 17a den Werkzeugträger übernimmt. Es ist vorteilhaft, wenn die Kupplung 24a als eine Reibkupplung ausgebildet ist, die gegebenenfalls auch als Rutsch-Sicherheitskupplung wirkt. So kann auch bei höherer Antriebsgeschwindigkeit der linken Antriebseinheit 17 das Zahnrad 21 der Antriebseinheit 17a diese Übergeschwindigkeit ausgleichen.

An der Indexierstation 13 kann beispielsweise eine automatische Montage- oder Bearbeitungsmaschine angeordnet sein, die an den sechs auf dem Werkzeugträger angeordneten Werkstücken nacheinander Bearbeitungs- oder Montagevorgänge vornimmt. Dazu wird der Werkzeugträger in den sechs aufeinanderfolgenden Stellungen genau positioniert oder indexiert. Dazu wird der Werkstückträger 19 zuerst durch gesteuerte Abschaltung der Antriebseinheiten in eine Position gebracht, die schon relativ genau der Sollposition entspricht. Vorteilhaft wird als Steuersignalgeber für die Werkstückträgerposition ein berührungsloser, beispielsweise induktiver oder kapazitiver Fühler 117 verwendet, der mit der Verzahnung 20 zusammenwirkt und die Zahl der an ihm vorbeigelaufenen Zähne vom Werkstückträgeranfang zählt. Durch diese genaue Digital-Wegmessung kann eine genaue und leicht einstellbare und programmierbare Position angefahren werden. Danach wird die Indexiereinheit durch Betätigung des die Welle 74 (Fig. 9) drehenden Motors betätigt, und das Zahnstangenstück 33 greift in die Verzahnung 20 ein. Durch die Benutzung der Zahnstange zum Indexieren wird nicht nur eine sehr genaue, sondern auch sehr anpassungsfähige Indexierung erreicht. Die Teilung ist dabei nur durch die Zahnteilung vorgegeben, die eine große Freiheit in der Positionswahl läßt. Nach durchgeführter Bearbeitung wird der Indexierhebel 39 wieder zurückgeschwenkt, und der Antrieb transportiert den Werkstückträger um eine Werkstückteilung weiter bzw. um ein Bruchteil davon, falls mehrere aufeinanderfolgende Arbeitsgänge an einem Werkstück vorzunehmen sind. Der Werkstückträger läuft wegen seiner Rollenführung auch bei großen Werkstückgewichten leicht und reibungslos. Die als Lauf- und Führungsrollen verwendeten kugelgelagerten Rollen laufen nicht nur leicht und können erhebliche Kräfte aufnehmen, sondern sorgen auch für eine sehr genaue Führung. Es hat sich gezeigt, daß eine bis auf hundertstel Millimeter genaue Positionierung möglich ist, wenn die Indexiereinheit 30 den Werkstückträger über die Führungsrollen 104 an die gegenüberliegende Führungsschiene anlegt. Voraussetzung dafür ist allerdings eine genau ausgerichtete und bearbeitete Führungsschiene. Gegebenenfalls kann dort in die im übrigen aus üblichem Profilmaterial bestehende Schiene eine genau bearbeitete Führungsleiste eingesetzt werden. Bei sehr großen Kräften, Abmessungen oder Gewichten ist es möglich, zusätzliche Lauf- und Führungsrollen im Mittelbereich der Seiten vorzusehen. Ferner ist es möglich, andere Laufkörper als Rollen zu verwenden. So können beispielsweise bei relativ geringem Gewicht der Werkstückträger Kugeln verwendet werden, die den Vorteil haben, daß sie in beiden Laufrichtungen wirksam sind, so daß bei einem Werkstückträger 19a (Fig. 4 und 5) statt der beiden Rollen nur eine Laufkugel im Eckbereich vorgesehen werden muß.

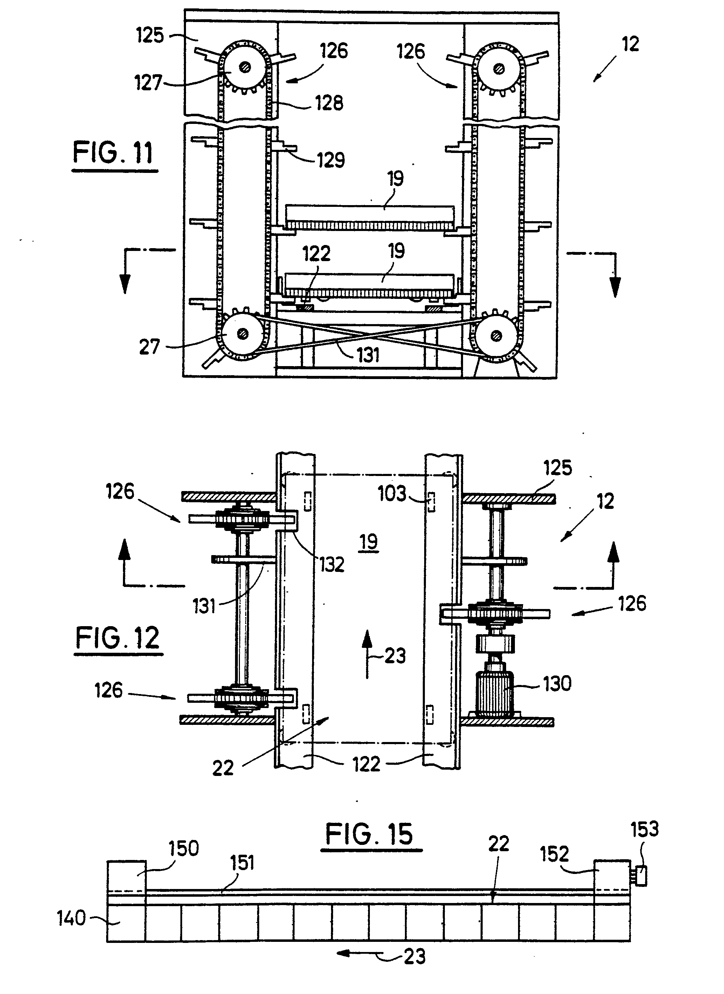

In Fig. 11 und 12 ist eine Pufferstation 12 dargestellt, die als Zwischenspeicher für Werkstückträger während des Produktions- oder Montageablaufes dient. Sie besteht aus einem paternosterartigen Aufzug, der die einzelnen Werkzeugträger von den Führungsschienen 122 abhebt und in beliebiger Anzahl übereinander trägt. Sie ist als Durchlauf-Speicher ausgebildet, d. h. sie wird von dem Werkstückträger durchfahren, falls keine Zwischenspeicherung notwendig ist.

Die Pufferstation 12 besitzt ein in Fig. 11 unterbrochen dargestelltes Gestell 125, an dem drei Kettenförderer 126 angeordnet sind, und zwar zwei mit Abstand voneinander auf einer Seite der Führungsbahn 22 und einer etwa mittig zwischen diesen auf der entgegengesetzten Seite. Jeder Kettenförderer 126 besteht aus zwei in Abstand übereinander angeordneten Kettenrädern 127 und einer diese verbindenden Kette 128, die im Abstand voneinander angeordnete Tragfinger 129 trägt. Alle drei Kettenförderer 126 werden synchron von einem Motor 130 aus angetrieben, indem die Wellen der unteren Kettenräder 127 durch einer Kette oder einen Zahnriemen 131 miteinander verbunden sind. Die Tragfinger 129 ragen durch Ausschnitte 132 in den Führungs- oder Laufschienen 122 hindurch, die vom äußeren Rand her so weit nach innen ragen, daß die Lauffläche für die Rollen 103 des Werkstückträgers 19 ununterbrochen durchlaufen. Durch den Versatz der Ausschnitte in Längsrichtung bleibt auch die Seitenführung des Werkstückträgers bei seinem Durchlaufen weitgehend erhalten.

Zum Speichern wird der Werkstückträger durch einem nicht dargestellten Antrieb der beschriebenen Art in der Station gestoppt. Die Kettenförderer 126 werden über den Motor 130 so betätigt, daß die nach innen weisenden Tragfinger 129 sich aufwärts bewegen. Die durch die Ausschnitte 132 hindurchlaufenden Tragfinger heben den Werkstückträger 19 an und transportieren ihn aufwärts. Wenn die nächsten Tragfinger 129 etwas unterhalb der Tragschiene 122 stehen, wird der Speicher gestoppt und entweder zum Speichern des nächsten Werkstückträgers aufwärts oder zum Wiedereinführen eines Werkstückträgers in die Führungsbahn 22 abwärts bewegt. Wenn eine sehr genaue Führung und Steuerung der Tragfinger möglich ist, könnten diese auch so ausgebildet sein, daß sie die Ausnehmungen 132 einschließlich der Ausschnitte in den vertikalen Schenkeln der L-förmigen Führungsschiene weitgehend ausfüllen und damit die Führung der durchlaufenden Werkstückträger übernehmen. In diesem Falle könnte auch auf den gegenseitigen Versatz der Förderer verzichtet werden. Abhängig davon sowie von der Größe der Werkstückträger kann eine beliebige Anzahl von Kettenförderern 126 verwendet werden. Statt einer Kette ist auch dort ein Zahnriemen oder eine gleichwirkende Hubvorrichtung möglich, beispielsweise eine Gewindespindel.

Die in Fig. 1 und 13 gezeigte Schwenkeinheit 15 besteht aus einem tischförmigen Rahmen mit einer horizontalen, im wesentlichen quadratischen Platte 77, auf der eine vertikale Achse 41 angebracht ist. An deren oberem Ende ist ein Schwenkelement 42 gelagert, das aus durch Querholme 78 miteinander verbundenen Führungsschienen 122 besteht. An einer Führungsschiene ist eine Antriebseinheit 17 angeordnet. Die Lagerung erfolgt beim dargestellten Beispiel außermittig, kann aber auch mittig erfolgen.

Ein Schwenkantrieb 142 besteht aus einem Getriebemotor, der ein relativ großes Reibrad 79 antreibt, dessen Achse parallel zur Längserstreckung der Führung 22 unterhalb dieser verläuft. Das Schwenkelement 42 ist auf der Achse, beispielsweise durch eine Kugellagerung mit einem gewissen Spiel, derart gelagert, daß das Reibrad 79 unter dem Gewicht des Schwenkelementes und Antriebes auf der Oberfläche der Platte 77 aufliegt und bei Betätigung des umsteuerbaren Getriebemotors das Schwenkelement in die gewünschte Richtung verschwenkt. Der Werkstückträger verläßt das Schwenkelement in der gleichen Richtung, in der er heraufgeschoben wurde, so daß die Antriebseinheit 17 nicht umsteuerbar zu sein braucht.

In Fig. 14 ist ein System dargestellt, das beispielsweise mit quadratischen Werkstückträgern nach Fig. 4 arbeiten kann. Es bildet eine geschlossene Anordnung in Form eines langgestreckten Rechtecks, in dem die Werkstückträger im Kreislauf umlaufen. Bei dem dargestellten Beispiel beginnt die Bearbeitung an der manuellen Arbeitsstation 11a, an der manuell das erste Teil auf den leeren Werkstückträger aufgelegt wird. In einer in Transportrichtung 23 nachfolgenden Station 13a wird der Werkstückträger indexiert bzw. positioniert und mittels einer automatischen Zuführung ein weiteres Teil hinzugefügt bzw. montiert. Das gleiche geschieht in der (jeweils über eine Transport-Zwischenstation 14a) nachfolgenden Eckeinheit 140, in der der Werkstückträger rechtwinklig quer abtransportiert wird. Diese Eckeinheit wird anhand von Fig. 15 anschließend beschrieben. Sie kann aber gleichzeitig als automatische.

Arbeitsstation 140a oder manuelle Arbeitsstation 140b benutzt werden.

Wiederum über eine zwischengeschaltete Transportstation 14a und eine Eckeinheit 140 schließt sich die zweite Längsseite des Systems an, die mit zwei manuellen Arbeitsplätzen 16a beginnt und daran anschließend drei automatische Arbeitsstationen 13b, c, d aufweist. Eine manuelle Arbeitsstation 16a leitet zu einer weiteren Eckeinheit über, von der aus über eine Transporteinheit 14a die kombinierte Eck/Arbeitsstation 140b beschickt wird. Eine Puffereinheit 12a leitet zu der Entnahmestation 11b über, an der die fertig montierten Werkstücke von dem Werkstückträger entnommen werden. Die Puffereinheit 12a besteht aus einer Eckeinheit entsprechend der Eckeinheit 140 nach Fig. 15, bei der jedoch zusätzlich eine der Außenseiten eine absenkbare Führungsschiene hat, so daß ein T-Anschluß 141 entsteht, dessen freier Anschluß in eine Speicherstrecke 142 führt, die unter einem kleinen Winkel schräg aufwärts geneigte Führungsschienen 112 hat, deren Länge der Anzahl der zu speichernden Werkstückträger angepaßt ist. Lediglich die erste Einheit dieser Speicherstrecke benötigt einen Antrieb, über den die Werkstückträger in die Speicherstrecke hinein oder aus dieser heraus gefördert werden. Die übrigen Werkstückträger werden gegen ihr Eigengewicht hineingeschoben und laufen unter ihrem Eigengewicht wieder zurück, da die Strecke aufwärts geneigt ist.

Ein solcher T-Anschluß könnte auch für Verzweigungen verwendet werden, beispielsweise das Aussondern fehlerhafter Werkstücke zu einer Nachbearbeitung. Besonders einfach ist solch ein Speicher in einer Ecke anzuordnen oder beispielsweise statt einer der Transporteinheiten 14a an den kurzen Seiten des Rechtecks, so daß dann als Speicherstrecke der Raum im Inneren des Rechtecks verwendet werden könnte. Auf diese Weise könnte auch eine Rückführung fehlerhafter Werkstücke zu einer Nachmontage oder dergleichen durchgeführt werden. Für einen schnellen Transport, bei dem es nicht auf eine genaue Positionierung ankommt, könnte eine Antriebseinheit verwendet werden, die statt des Zahnrades 21 ein Reibrad besitzt. Der sonstige Aufbau könnte ähnlich dem nach Fig. 6 bis 8 sein. Insbesondere die abgefedert gelagerte Rolle 107 ist vorteilhaft, da über sie die Anpressung des Reibrades vorgenommen werden kann. Auf einen Freilauf wird man verzichten können, wenn sichergestellt ist, daß das Reibrad auch mit einem gewissen Schlupf arbeiten kann. Mit dieser Anordnung kann ein schneller Transport durchgeführt werden, beispielsweise ein Rücktransport von Werkstückträgern.

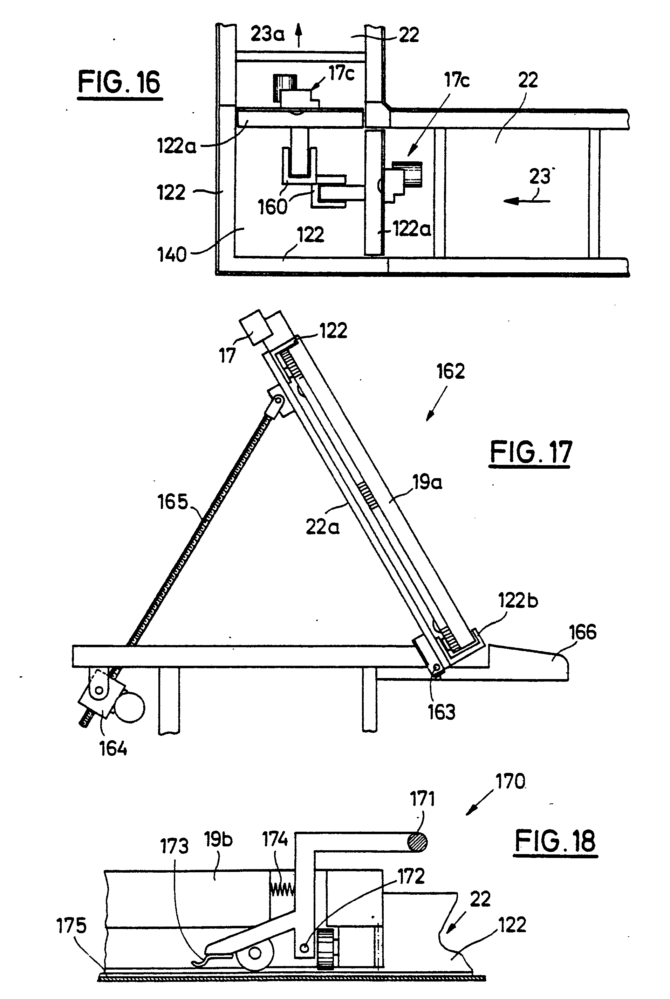

Bei einem System, das im wesentlichen eine geradlinige Montage- oder Produktionslinie umfaßt, könnte der Rücktransport in der in Fig. 15 schematisch gezeigten Weise erfolgen. Am Ende der in Transportrichtung 23 laufenden Montage befindet sich eine Eckeinheit 140, die die Werkstückträger in eine Abkippeinheit 150 transportiert. In ihr ist ein Führungsbahnstück in ähnlicher Weise wie anschließend anhand von Fig. 16 beschrieben kippbar gelagert, jedoch um eine zur Eckeinheit 140 weisende Achse nach unten. Der Werkstückträger wird mit seiner sonst horizontalen Ebene in die Vertikale gekippt und kann dann senkrecht stehend unter seiner Schwerkraft oder durch Reibradantrieb, wie vorher beschrieben, auf einer Rücktransportstrecke 151 an der Rückseite der Montageeinheiten entlang zum Anfang der Strecke laufen, ohne daß zusätzlicher Raum erforderlich ist. Dies ist besonders vorteilhaft bei sehr breiten Werkstückträgern, deren Rücktransportstrecke sonst einen großen Raumbedarf hätte.

Am Ende der Rücktransportstrecke befindet sich eine Kipp-Hubeinheit 152, die entsprechend der Station 150 aufgebaut ist und die Werkstückträger wieder in die Horizontale kippt. Sie ist zusätzlich mit einem Hubmechanismus 153 ausgestattet, der mit einer Gewindespindel oder dergleichen arbeitet und die Werkstückträger auf die Höhe der Führungsbahn 22 hebt, falls sie durch Schwerkraft transportiert wurden.

Die Eckeinheit 140 ist in Fig. 16 gezeigt. Sie besteht für einen quadratischen Werkstückträger aus einer im wesentlichen quadratischen Einheit, die an zwei zusammenstoßenden Seiten fest montierte Führungsschienen 122 aufweist, die sich in der Außenecke treffen. Die Führungsschienen an den beiden anderen Seiten, an die zwei rechtwinklig zueinander stehende Führungsbahnen 22 des Systems angeschlossen sind, bestehen aus Führungsschien enstücken 122a, die über einen Kippmechanismus 160 absenkbar sind. Im dargestellten Beispiel tragen die Führungsschienenstücke 122a auch die zugehörigen Antriebseinheiten 17c, so daß die beiden Außenkanten der Eckeinheit frei zugänglich sind und die Eckeinheit als Arbeitseinheit verwendet werden kann. Die Antriebseinheiten 17c können der Antriebseinheit 17 gleichen, jedoch kann auf die Andrückung über die Rollen 107, 108 verzichtet werden und dafür ein Mechanismus vorhanden sein, der die Zahnräder nach dem Hochschwenken der Führungsschienenstücke 122a in Eingriff bringt. Das kann auch durch eine entsprechende Schwenkbewegung der Führungsstangenstücke selbst geschehen.

Ein in Transportrichtung 23a in die Eckeinheit einlaufender Werkstückträger läuft über das dann abgesenkte quer zur Transportrichtung liegende Führungsstangenstück 122a hinweg. Danach wird dieses Führungsstangenstück 122a hochgeschwenkt und das andere Führungsstangenstück 122a heruntergeschwenkt, so daß der Werkstückträger nun unter 90° versetzt herausgefahren werden kann.

In Fig. 17 ist eine Kippeinheit 162 gezeigt, die dazu dient, Werkstückträger in eine geneigte Stellung zu bringen. Dazu ist die Führungsbahn 22 dieser Einheit um eine Achse 163 schwenkbar gelagert und die der Achse entgegengesetzte Seite ist über einen Hubmechanismus 164, der beispielsweise mit einer Hub-Gewindespindel 165 arbeitet, anheb- und absenkbar. Wenn die Kippung, wie dargestellt, um einen erheblichen Winkel erfolgt, dann ist es vorteilhaft, die entsprechenden Führungsstangen 122b zumindest im unteren Bereich als U-Schienen auszubilden, um ein Herausrutschen der Werkstückträger zu vermeiden. Vorteilhaft schließt sich an jede der zur Bearbeitung verwendeten Einheiten eine Handauflage 166 an.

Die Kippeinheit ist vorgesehen, um große Werkstückträger, an denen an unterschiedlichen Stellen Montagen vorzunehmen sind, in eine für die Montageperson ergonomisch günstige Lage zu bringen. Dies kann in einer Einzelarbeitsstation erfolgen, vorteilhaft wird jedoch bei solchen Werkstückträgern eine ganze Montagelinie entsprechend schräg angeordnet und am Beginn und Ende der Linie je eine Kippstation 162 vorgesehen. Sie kann auch mit einer Eckstation vereinigt sein.

In Fig. 18 ist eine Kontakteinrichtung dargestellt, die an der Vorderseite eines Werkstückträgers angeordnet sein kann und verhindert, daß die Bedienungsperson die Hand zwischen zwei aufeinander zulaufende Werkstückträger einklemmt. Dies ist unter Umständen ratsam, weil die Werkstückträger bei dem System nach der Erfindung nicht in festen Abständen zueinander transportiert werden, sondern der Transport sehr flexibel gestaltet ist. So kann beispielsweise bei der Anordnung nach Fig. 10 der nächste Werkstückträger schon einlaufen, bevor der erste Werkstückträger die entsprechende Station verlassen hat. Dadurch wirken zwischengeschaltete Transportstationen jeweils als Pufferstation für die Arbeitsplätze.

Die Kontakteinrichtung 170 besteht aus einem Bügel 171, der nach Art eines mehrfach abgewinkelten, doppelarmigen Hebels um eine horizontale Achse 172 schwenkbar gelagert ist. Sein etwas oberhalb des Werkstückträgers 19b über dessen Vorderkante vorstehender Teil bildet eine für die Werkstückträgerbreite verlaufende Stange, während an seinem anderen Ende eine Kontaktfeder 173 angebracht ist, die, wenn der Hebel entgegen der Kraft einer Feder 174 durch Berührung des Bügels 171 zurückgeschwenkt wird, eine zwischen den Führungsschienen verlaufende Kontaktschiene 175 berührt, wodurch ein Niederspannungssignal ausgelöst wird, das über die Steuerung den Antrieb sofort stillsetzt. Diese Anordnung mit Kontaktschiene hat den Vorteil, das sie auch anspricht, wenn beispielsweise ein Werkzeug in die Führungsbahn fällt.

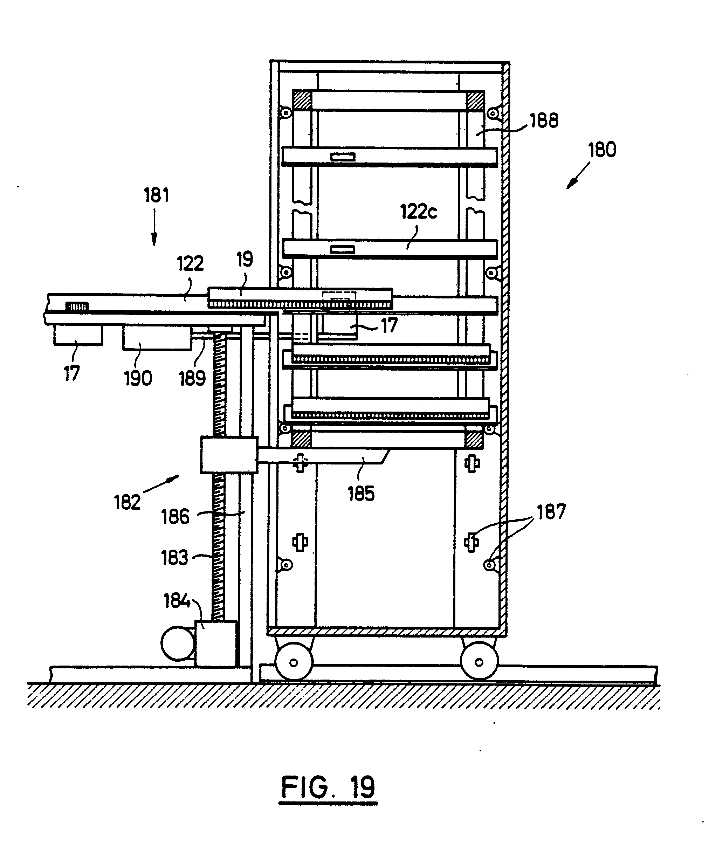

In Fig. 19 ist ein transportables Magazin 180 gezeigt, das zum Fertigungs- und Montagesystem gehört und an eine Magazinierstation 181 angeschlossen werden kann. Es dient dazu, mehrere Werkzeugträger automatisch aufzunehmen, damit sie entweder zur Zwischenlagerung oder zur Übergabe an ein anderes gleichartiges System unabhängig von der jeweiligen Montagestrecke transportiert werden können. Dadurch können verschiedene Montagesysteme miteinander verknüpft werden.

Die Magazinierstation 181 besteht aus einer normalen Transportstation mit frei endenden Führungsschienen 122, die einen Antrieb 17 besitzt und zusätzlich einen Hubmechanismus 182 aufweist, der beispielsweise eine von einer Motor-Getriebeeinheit 184 drehbar angetriebene vertikal gelagerte Gewindespindel 183 aufweist, auf der ein mittels einer Bewegungsmutter angetriebener Hubarm 185 läuft, der zusätzlich auf einer · Führungssäule 186 gegen Verdrehung geführt ist.

Das Magazin 180 besteht aus einem fahrbaren Gestell, an dem Führungsrollen 187 angeordnet sind, die einen Innenrahmen 188 in senkrechter Richtung bewegbar führen, an dem übereinander horizontale Führungsschienenstücke 122c so angeordnet sind, daß zwischen ihnen jeweils ein Werkzeugträger (bei kürzeren Werkzeugträger gegebenenfalls auch mehrere hintereinander) aufgenommen werden können. Der Rahmen 188 kann mittels des Hubarmes 185 vertikal zwischen Stellungen verfahren werden, bei denen jeweils ein Führungsschienenstück 122c mit den Führungsschienen 122 der Magaziniereinheit 181 fluchten. Durch einen an einem Hebelarm 189 von einer Einschwenkeinheit 190 einschwenkbaren Antrieb 17 kann ein Werkstückträger 19 in das jeweilige « Fach » des Magazins gefahren werden. Nach Absenken des Hubarmes 185 in seine unterste Stellung kann das mit Rädern versehene, in einer U-Schiene geführte Magazin 180 in Fig. 18 nach rechts herausgezogen und dann beliebig verfahren werden.

Durch die Erfindung ist es möglich, Werkstückträger mit einzelnen oder zahlreichen Werkstücken und in beliebiger Gestalt zwischen langgestreckt und quadratisch mit großer Genauigkeit zu positionieren, ohne daß dafür harte Anschläge notwendig sind. Durch stufenweises oder stufenloses Beschleunigen und Verzögern ist eine weitere Verbesserung des erschütterungsfreien Transportes möglich. Die Steuerung kann überwiegend rein elektrisch erfolgen, so daß sie über elektronische, programmierbare Bauteile erfolgen kann, die das Einrichten und Umstellen der Anlage auf geänderte Werkstücke vereinfachen. Die Tatsache, daß die einzelnen Einheiten über keine mechanischen Antriebsteile miteinander verbunden werden müssen und auch keine wesentlichen Synchronisationsmaßnahmen zwischen den einzelnen Einheiten notwendig sind, erleichtert die Herstellung und Aufstellung des Systems nach dem Baukastenprinzip. Dabei ist es besonders einfach möglich, bedingte Verzweigungen vorzunehmen, d. h. bestimmte Werkstückträger auszusondern, Sonderbehandlungen zu unterziehen oder rückzuführen. In diesem Zusammenhang kann es vorteilhaft sein, an dem Werkzeugträger setzbare Kodierelemente 190 vorzusehen, wie sie in Fig. 2 angedeutet sind. Dies können übliche ein- und ausfahrbare oder hebelartig kippende Stifte sein, die je ein Bit einer Information darstellen und im Zuge des Durchlaufes der Werkstückträger gesetzt, abgefühlt und rückgestellt werden können.

Besonders vorteilhaft kann das Magazin 180 auch als bei Bedarf in das System einzuschaltender Speicher verwendet werden, wenn die Rückwand offen ausgeführt und an eine weiterführende Führungsbahn anschließbar ist.

Die Steuerung des Systems erfolgt dezentral über jeder einzelnen Systemeinheit 11 bis 16 (Fig. 1) zugeordnete vorzugsweise elektronische Steuereinrichtungen 119, die in Abhängigkeit von Meßsignalen, manuellen Eingaben bzw. Betätigungen und Programmen sowie von der jeweils davor oder danach angeordneten Einheit erhaltenen Daten die jeweilige Einheit und ggf. die daran angeordneten Maschinen steuert und über rein elektrische Verknüpfungen die notwendigen Signale an die Folgeeinheiten weitergibt. Das System kann somit unabhängig von einer Zentralsteuerung arbeiten, ist weniger störungsanfällig und umzurüsten, ohne einen Eingriff in die Steuerung vorzunehmen.

Die Signalverbindung zwischen den einzelnen Einheiten kann über eine für alle entsprechenden Systeme normierte Schnittstelle erfolgen.

**Patentansprüche**

1. Fertigungs- oder Montagesystem mit Transporteinrichtungen, die Werkstückträger (19, 19a) für darauf anzuordnende Werkstücke mittels an dem Werkstückträger angreifender Antriebsorgane durch die einzelnen Stationen des Systems transportieren, wobei das system aus mehreren, gegebenenfalls unterschiedlichen Systemeinneiten (11 bis 16) mit wenigstens je einer unabhängig und gesteuert antreibbaren Antriebseinheit (17, 17a, b) besteht, dadurch gekennzeichnet, daß die Werkstückträger (19, 19a) zumindest in ihrer Längsrichtung verlaufende Eingriffselemente (20) und die Antriebseinheiten darin formschlüssig eingreifende, umlaufende Antriebsorgane (21) aufweisen, daß die Werkstückträger (19, 19a) auf von dem Antrieb unabhängigen Führungen (22) geführt sind und daß wenigsten eines der Antriebsorgane (21) eine in Transportrichtung (23) wirksame Freilauf-Einrichtung (24, 24a) hat.

2. System nach Anspruch 1, dadurch gekennzeichnet, daß jede Antriebseinheit (17) oder Gruppe von Antriebseinheiten (17a, 17b) einer Systemeinheit (13, 14, 16) wenigstens einen eigenen Getriebemotor (25), vorzugsweise einen Kraftfahrzeug-Scheibenwischermotor, aufweist.

3. System nach Anspruch 1 oder 2, dadurch gekennzeichnet, daß die Führungen (22) seitlich angeordnete Schienen (122, 122a, b, c) enthalten, die mit vorzugsweise an den Ecken der Werkstückträger (19, 19a) angeordneten Rollkörpern (103, 103a, a', 104) zusammenwirken.

4. System nach Anspruch 3, dadurch gekennzeichnet, daß Rollkörper (103, 103a, a', 104) sowohl mit Horizontal-Führungen als auch mit Seitenführungen zusammenwirken und vorzugsweise im Bereich der vier Seitenkanten der Werkstückträger angeordnete Rollen sind, von denen vier Führungsrollen (104) mit im wesentlichen vertikaler Achse im Eckbereich angeordnet sind und Laufrollen (103, 103a, a') mit horizontaler Achse derart angeordnet sind, daß jeweils nur die in Transportrichtung (23) wirksamen Laufrollen (103, 103a) mit den Führungsschienen (122, 122a, b, c) in Eingriff sind.

5. System nach einem der vorhergehenden Ansprüche, dadurch gekennzeichnet, daß die Antriebsorgane (21) Zahnräder und die Eingriffselemente (20) an wenigstens einer, vorzugsweise allen vier Seitenkanten der Werkstückträger (19, 19a) angeordnete oder eingeformte Zahnstangen (101, 101a) sind.

6. System nach Anspruch 5, gekennzeichnet durch mit den Zahnstangen (101, 101a) zusammenwirkende Zähleinrichtungen (117), die mit einer Steuer- und Positioniereinrichtung zusammenwirken.

7. System nach einem der vorhergehenden Ansprüche, dadurch gekennzeichnet, daß eine vom Antrieb unabhängige Indexiereinrichtung (30) für die Werkstückträger (19, 19a) vorgesehen ist, mit der die Werkstückträger (19, 19a) ggf. in mehreren Positionen genau positionierbar sind und die vorzugsweise ein in formschlüssigen Eingriff mit den Eingriffselemente (20) zu bringendes Indexierelement (33) haben.

8. System nach Anspruch 7, dadurch gekennzeichnet, daß die Indexiereinrichtung (30) mit einem seitlich, vorzugsweise über einen gesonderten Getriebemotor vorschieb- oder schwenkbaren Indexierelement (33) in Form eines oder mehrerer Zähne versehen ist, die in die Eingriffselemente (20) eingreifen und den Werkstückträger (19) gegen seitliche Führungen (122) drücken.

9. System nach einem der vorhergehenden Ansprüche, dadurch gekennzeichnet, daß zur Schaffung einer Schwenkeinheit (15) die Führungen (22) und gegebenenfalls die Antriebseinheit (17) für die Werkstückträger (19) an einem um eine im wesentlichen vertikale Achse (41) schwenkbaren Schwenkelement (42) angebracht sind, wobei vorzugsweise der Schwenkantrieb (43) für das Schwenkelement (42) angebrachten Reibradantrieb (79) besteht und das Schwenkelement (42) auf seiner Achse (41) in Richtung seiner Längserstreckung beweglich gelagert ist.

10. System nach einem der vorhergehenden Ansprüche, gekennzeichnet durch eine Eckeinheit (140), die zwei zueinander unter einem vorzugsweise rechten Winkel stehende Schienenpaare (122, 122a) aufweist, von denen wenigstens je eine Schiene (122) anheb- und absenkbar ist.

11. System nach einem der vorhergehenden Ansprüche, gekennzeichnet durch eine Pufferstrecke (142), deren längs oder quer zur Haupt-Transportrichtung angeordnete Führungsbahn schräg aufwärts geneigt ist.

12. System nach einem der vorhergehenden Ansprüche, gekennzeichnet durch eine Puffereinheit (12) mit paternosterartigen Führungen (126) zum Übereinander-Zwischenspeichern mehrerer Werkstückträger (19), wobei die Führungen durch Ausschnitte (132) in den vorzugsweise durchlaufenden Führungsbahnen (22) hindurchgreifende Tragfinger (129) aufweisen, die vorzugsweise auf den einander gegenüberliegenden Seiten der Führungsbahnen (22) in Transportrichtung (23) gegeneinander versetzt angeordnet sind.

13. System nach einem der vorhergehenden Ansprüche, gekennzeichnet durch eine Kippstation (162), in der die Werkstückträger (19a) aus einer horizontalen Ebene in eine Schräglage oder in die Vertikale gekippt werden oder umgekehrt, mit einem Kippantrieb (164, 165), mit dem die Führungsbahn (22a) zwischen einer horizontalen Stellung und der Kippstellung bewegbar ist.

14. System nach einem der vorhergehenden Ansprüche, gekennzeichnet durch eine Rückführstrecke, die eine Kippstation (150) zur Kippung der Werkstückträger in die Vertikale und eine Führungsbahn (151) für die vertikal ausgerichteten Werkstückträger aufweist, die vorzugsweise durch geneigte Anordnung mit Schwerkrafttransport arbeitet und eine ggf. kombinierte Hub-Kippstation (152, 153) zur Wiederaufbringung der Werkstückträger auf die Hauptführungsbahn (22) aufweist.

15. System nach einem der vorhergehenden Ansprüche, gekennzeichnet durch ein transportables Magazin (180) mit einer Anzahl übereinander angeordneter Führungsbahnen für Werkstückträger (19), die von einer Magazinierstation (181) mit Werkstückträgern (19) zu beschicken sind und vorzugsweise von einem an der Magazinierstation angeordneten Hubmechanismus (182) anheb- und absenkbar sind, wobei der horizontale Antrieb der Werkstückträger im Magazin (180) durch eine an der Magazinierstation (181) angeordnete, in das Magazin einführbare Antriebseinheit (17) durchgeführt wird.

16. System nach einem der vorhergehenden Ansprüche, dadurch gekennzeichnet, daß die einzelnen Systemeinheiten (11 bis 16, 140, 141) ohne mechanische Antriebsverbindung aneinander anschließbar sind.

17. System nach einem der vorhergehenden Ansprüche, dadurch gekennzeichnet, daß an einer Systemeinheit (13)· in Längsabstand voneinander zwei vom gleichen Motor (25) angetriebene Antriebseinheiten (17a, b) angeordnet sind, von denen eine eine betätigbare Kupplung (24a) und die andere, vorzugsweise in Laufrichtung hinter der ersten liegende, einen in einer Richtung wirkenden Freilauf (24) aufweist.

18. System nach einem der vorhergehenden Ansprüche, dadurch gekennzeichnet, daß ein Antriebsorgan (21) im wesentlichen quer zur Transportrichtung (23), vorzugsweise auf einer Wippe, schwenkbar gelagert ist und ein mit dem Werkstückträger (19a) zum federnden Andrücken des Antriebsorgans (21) zusammenwirkendes Vorspannorgan (107) und vorzugsweise ein in Transportrichtung (23) dahinter angeordnetes, ebenfalls mit dem Werkstückträger (19) zusammenwirkendes Verriegelungsorgan (108) aufweist, das die Eingriffsposition des Werkstückträgers (19a) festlegt, wobei vorteilhaft dem Antriebsorgan (21) eine in seiner Nicht-Eingriffsposition wirksame Bremseinrichtung (110) gegen Drehung des Antriebsorgans (21) zugeordnet ist.

19. System nach einem der vorhergehenden Ansprüche, dadurch gekennzeichnet, daß am Werkstückträger (19b) eine Kontaktvorrichtung (170) angeordnet ist, die von in der Bahn des Werkstückträgers befindlichen Gegenständen· zur Abschaltung des Werstückträgerantriebes betätigbar ist und vorzugsweise mit einer längs der Führungsbahn (22) verlaufenden Kontaktbahn (175) zusammenwirkt.

20. System nach einem der vorhergehenden Ansprüche, dadurch gekennzeichnet, daß die Werkstückträger (19) setzbare Kodierelemente (190) aufweisen.

**Claims**

1. Manufacturing and assembling system with conveying means, which convey the work carriers (19, 19a) for workpieces to be arranged thereon through the individual system stations by means of drive members engaging on the work carrier, the system comprising a plurality of optionally different system units (11 to 16) with at least one independently and controlled drivable drive unit (17, 17a, 17b), characterized in that the work carriers (19, 19a) have engagement members (20) at least running in the longitudinal direction thereof and the drive units have rotary drive members (21) positively engaging therein, but the work carriers (19, 19a) are guided on guides (22) independently of the drive and that at least one of the drive members (21) has an idle running device (24, 24a) acting in the conveying direction (23).

2. System according to claim 1, characterized in that each drive unit (17) or group of drive units (17a, 17b) of a system unit (13, 14, 16) has at least one geared motor (25), preferably a motor vehicle windscreen wiper motor in each case.

3. System according to claims 1 or 2, characterized in that the guides (22) contain laterally positioned rails (122, 122a, b, c) which cooperate with rolling members (103, 103a, a', 104) arranged at the corners of the work carriers (19, 19a).

4. System according to claim 3, characterized in that the rolling members (103, 103a, a', 104) cooperate both with horizontal guides and with lateral guides and preferably rollers arranged in the vicinity of four lateral edges of the work carriers, whereof four guide rollers (104) with a substantially vertical axis are arranged in the corner area and small rollers (103, 103a, a') with a horizontal axis are arranged in such a way that in each case only the rollers (103, 103a) acting in the conveying direction (23) engage with the guide rails (122, 122a, b, c).

5. System according to one of the preceding claims, characterized in that the drive members (21) are pinions and the engagement members (20) are racks (101, 101a) arranged or shaped on at least one and preferably all four lateral edges of the work carriers (19, 19a).

6. System according to claim 5, characterized by counting means (117) cooperating with the racks (101, 101a) and which cooperate with a control and positioning means.

7. System according to one of the preceding claims, characterized in that an indexing device (30), which is independent of the drive, is provided for the work carriers (19, 19a) and enables the latter to be accurately positioned optionally in several positions and which preferably have an indexing element (33) which can be positively engaged with the engagement members (20).

8. System according to claim 7, characterized in that the indexing means (30) is provided with a lateral indexing element (33) in the form of one or more teeth, which is advanceable or swivellable preferably by means of a separate geared motor, said teeth engaging in the engagement elements (20) and pressing the work carriers (19) against lateral guides (122).

9. System according to one of the preceding claims, characterized in that for obtaining a swivelling unit (15), guides (22) and optionally the drive unit (17) for the work carriers (19) are fitted to a swivelling element (42) swivellable about a substantially vertical shaft (41), the swivelling drive (43) for the swivelling element (42) preferably comprising a friction wheel drive (79) fitted to the swivelling element (42) and the latter is movably mounted on its axis (41) in the direction of its longitudinal extension.

10. System according to one of the preceding claims, characterized by a corner unit (140), which has two pairs of rails (122, 122a), which are preferably at a right angle to one another and whereof at least one rail (122) in each case is raisable and lowerable.

11. System according to one of the preceding claims, characterized by a buffer section (142), whose guideway which is positioned longitudinally or transversely with respect to the main conveying direction slopes upwards.

12. System according to one of the preceding claims, characterized by a buffer unit (12) with endless chain-like guides (126) for the superimposed intermediate storage of a plurality of work carriers (19), the guides having support fingers (129) passing through cutouts (132) in the preferably continuous guideways (22), said fingers being preferably arranged in displaced manner with respect to one another on the facing sides of guides (22) in the conveying direction (23).

13. System according to one of the preceding claims, characterized by a tilting station (162), in which the work carriers (19a) can be tilted from a horizontal plane into a sloping position or into the vertical position or vice versa, with a tilting drive (164, 165) with which the guideway (22a) can be moved between a horizontal position and the tilting position.

14. System according to one of the preceding claims, characterized by a return section, which has a tilting station (150) for tilting the work carriers into the vertical position and a guideway (151) for the vertically oriented work carriers, which preferably operates by an inclined arrangement with gravity conveying and has an optionally combined lifting — tilting station (152, 153) for reapplying the work carriers to the main guideway (22).

15. System according to one of the preceding claims, characterized by a conveyable storage means (180) with a plurality of superimposed guideways for work carriers (19), which are supplied with work carriers (19) from a storing station (181) and which are preferably raisable and lowerable by a lifting mechanism (182) arranged at the storing station, the horizontal drive of the work carriers in the storage means (180) being carried out by a drive unit (17) located at the storing station (181) and which can be introduced into the storage means.

16. System according to one of the preceding claims, characterized in that the individual system units (11 to 16, 140, 141) can be interconnected without a mechanical drive connection.

17. System according to one of the preceding claims, characterized in that two drive units (17a, b) driven by the same motor (25) are arranged in longitudinally spaced manner on a system unit (13), whereof one has an actualable clutch (24a) and the other an idle running device (24) acting in one direction and preferably located in the running direction behind the first unit.

18. System according to one of the preceding claims, characterized in that a drive member (21) is swivellably mounted substantially at right angles to the conveying direction (23) and preferably on a rocker and having a prestressing member (107) cooperating with work carriers (19a) for resiliently pressing the drive member (21) and preferably a locking member (108) which also cooperates with work carrier (19) and which is preferably arranged behind the same in the conveying direction (23) and which fixes the engagement position of work carrier (19a), whilst to ensure that drive member (21) does not rotate with the same is advantageously associated a braking means (110) acting in its non-engagement position.

19. System according to one of the preceding claims, characterized in that a contact means (170) is arranged on work carrier (19b) and is operable by objects located in the path of the work carrier for switching off the work carrier drive and preferably cooperates with a contact path (175) positioned along guideway (22).

20. System according to one of the preceding claims, characterized in that the work carriers (19) have settable coding elements (190).

**Revendications**

1. Système de fabrication ou de montage à dispositifs de transport, qui transportent, entre les postes individuels du système, des porte-pièces (19, 19a) prévus pour des pièces à disposer sur eux, au moyen d'organes d'entraînement agissant sur les porte-pièces, lequel système comporte plusieurs systèmes unitaires (11 à 16) éventuellement différents avec pour chacun au moins une unité d'entraînement (17, 17a, b) pouvant être entraînée et commandée indépendamment, caractérisé en ce que les porte-pièces (19, 19a) comportent des éléments d'engrènement (20) s'étendant au moins dans leur direction longitudinale et des organes d'entraînement (21) rotatifs s'engrenant par concordance de formes dans les unités d'entraînement, en ce que les porte-pièces (19, 19a) sont guidés sur des glissières (22) indépendantes de l'entraînement, et en ce qu'au moins l'un des organes d'entraînement (21) possède un dispositif à course libre (24, 24a) agissant dans la direction de transport (23).

2. Système selon la revendication 1, caractérisé en ce que chaque unité d'entraînement (17) ou groupe d'unités d'entraînement (17a, 17b) d'un système unitaire (13, 14, 16) comporte au moins son propre moteur d'entraînement (25), de préférence un moteur d'essuie-glace de véhicule automobile.

3. Système selon la revendication 1 ou 2, caractérisé en ce que les glissières (22) comportent des rails (122, 122a, b, c) disposés latéralement, qui coopèrent avec des corps de roulement (103, 103a, a', 104) disposés de préférence aux angles des porte-pièces (19, 19a).

4. Système selon la revendication 3, caractérisé en ce que les corps de roulement (103, 103a a', 104) coopèrent aussi bien avec des glissières horizontales qu'avec des glissières latérales et de préférence sont constitués par des rouleaux disposés dans la zone des quatre arêtes latérales des porte-pièces, parmi lesquels quatre rouleaux de guidage (104) sont, dans la zone des angles, disposés avec un axe essentiellement vertical et des rouleaux de roulement (103, 103a, a') disposés avec leur axe horizontal, de sorte que les rouleaux de roulement (103, 103a), chacun activé seulement dans la direction du transport (23), sont en prise avec les rails de guidage (122, 122a, b, c).

5. Système selon l'une quelconque des revendications précédentes, caractérisé en ce que les organes d'entraînement (21) sont des roues dentées et les éléments d'engrènement (20) sont constitués par des barres dentées (101, 101a) rapportées ou constituées sur au moins l'une et de préférence l'ensemble des quatre arêtes latérales des porte-pièces (19, 19a).

6. Système selon la revendication 5, caractérisé par des dispositifs de comptage (117) coopérant avec les barres dentées (101, 101a), qui coopèrent avec un dispositif de commande et de positionnement.

7. Système selon l'une quelconque des revendications précédentes, caractérisé en ce qu'il est prévu pour les porte-pièces (19, 19a) un dispositif d'indexation (30) indépendant de l'entraînement, avec lequel les porte-pièces (19, 19a) peuvent être positionnés exactement, éventuellement en plusieurs positions, et qui comporte de préférence un élément d'indexation (33) pouvant être amené en prise, par concordance de formes, avec les éléments d'engrènement (20).

8. Système selon la revendication 7, caractérisé en ce que le dispositif d'indexation (30) est pourvu d'un élément d'indexation latéral (33) pouvant être de préférence poussé ou pivoté par un moteur d'entraînement particulier, cet élément ayant la forme d'une ou de plusieurs dents qui s'engrènent dans les éléments d'engrènement (20) et pressent les porte-pièces (19) contre les glissières latérales (122).

9. Système selon l'une quelconque des revendications précédentes, caractérisé en ce que pour la réalisation d'une unité de pivotement (15), les glissières (22) et éventuellement l'unité d'entraînement (17) pour les porte-pièces (19) sont rapportés sur un élément de pivotement (42) pouvant pivoter sur un axe essentiellement vertical (41), le dispositif d'entraînement en rotation (43) pour l'élément de pivotement (42) étant constitué de préférence par un entraînement à roue de friction (79) rapporté sur l'élément de pivotement (42), cet élément étant positionné sur son axe (41) de façon mobile dans la direction de son étendue longitudinale.

10. Système selon l'une quelconque des revendications précédentes, caractérisé par une unité d'angle (140) qui comporte deux paires de rails (122, 122a) qui l'une par rapport à l'autre s'étendent de préférence sous un angle droit, l'un au moins des rails (122) de chaque paire pouvant être élevé ou abaissé.

11. Système selon l'une quelconque des revendications précédentes, caractérisé par un tronçon amortisseur (142) dont la voie de guidage, disposée le long ou transversalement à la direction de transport principale, est inclinée vers l'avant.

12. Système selon l'une quelconque des revendications précédentes, caractérisé par une unité d'amortissement (12) avec glissières (126) du type paternoster, pour le stockage intermédiaire, l'un par-dessus l'autre, de plusieurs porte-pièces (19), les glissières comportant des doigts de support (129) en prise dans des découpes (132) des voies de guidage (22) de préférence continues, ces doigts étant de préférence décalés l'un par rapport à celui situé sur le côté opposé de la voie de guidage (22), dans la direction de transport (23).

13. Système selon l'une quelconque des revendications précédentes, caractérisé par un poste de basculement (162) dans lequel les porte-pièces (19a) peuvent être basculés d'un plan horizontal dans une position inclinée ou à la verticale, ou inversement, avec un entraînement de basculement (164, 165) grâce auquel la voie de guidage (22a) est mobile entre une position horizontale et la position de basculement.

14. Système selon l'une quelconque des revendications précédentes, caractérisé par une section de retour qui comporte un poste de basculement (150) pour le basculement des porte-pièces à la verticale et une voie de guidage (151) pour les porte-pièces dirigés verticalement, qui travaille par transport par gravité, de préférence selon un agencement incliné, et qui comporte un poste, éventuellement de levage et de basculement combinés (152, 153) pour la réintroduction des porte-pièces sur la voie de guidage principale (22).

15. Système selon l'une quelconque des revendications précédentes, caractérisé par un magasin transportable (180) avec un certain nombre de voies de guidage superposées pour les porte-pièces (19), lesquelles voies sont à approvisionner en porte-pièce (19) à partir d'un poste d'emmagasinage (181) et de préférence pouvant être levées et abaissées grâce à un mécanisme de levage (182) disposé au poste d'emmagasinage, l'entraînement horizontal des porte-pièces dans le magasin (180) s'effectuant grâce à une unité d'entraînement (17) disposée au poste d'emmagasinage (181) et pouvant être introduite dans le magasin.

16. Système selon l'une quelconque des revendications précédentes, caractérisé en ce que les systèmes unitaires (11 à 16, 140, 141) peuvent être reliés les uns aux autres sans liaison d'entraînement mécanique.

17. Système selon l'une quelconque des revendications précédentes, caractérisé en ce que sur un système unitaire (13) sont disposées deux unités d'entraînement (17a, b) entraînées par le même moteur (25) et espacées longitudinalement l'une de l'autre, l'une comportant un accouplement actionnable (24a) et l'autre un dispositif à course libre (24) agissant dans une direction, de préférence situé, selon la direction du déplacement, derrière la première.

18. Système selon l'une quelconque des revendications précédentes, caractérisé en ce qu'un organe d'entraînement (21) s'étend essentiellement transversalement à la direction de transport (23), de préférence sur une bascule, est supporté de façon à pouvoir pivoter et comporte un organe de précontrainte (107) coopérant avec le porte-pièce (19a) pour presser élastiquement l'organe d'entraînement (21), ainsi, de préférence, qu'un organe de verrouillage (108) coopérant éventuellement avec le porte-pièce (19) et disposé en arrière, eu égard à la direction de transport (23), cet organe de verrouillage immobilisant la position de prise du porte-pièce (19a), de sorte qu'avantageusement est conférée à l'organe d'entraînement (21) une direction (110) de freinage agissant dans sa position de non-prise, à l'encontre d'une rotation de l'organe d'entraînement (21).

19. Système selon l'une quelconque des revendications précédentes, caractérisé en ce qu'un dispositif à contact (170) est disposé sur le porte-pièce (19b), qui est actionnable par les objets se trouvant dans le trajet du porte-pièce pour l'interruption de l'entraînement du porte-pièce, et de préférence coopère avec une piste de contact (175) s'étendant le long de la voie de guidage (22).

20. Système selon l'une quelconque des revendications précédentes, caractérisé en ce que les porte-pièces (19) comportent des éléments de codage composables (190).

FIG. 1

FIG.2

FIG.3

FIG.4

FIG.5

3/9

FIG.6

FIG.7

FIG.8

FIG.9

4

FIG.13

0 062 267

FIG. 14

140 — 140

14a

16a  13d  13c  23  13b  11a  16a 16a 14a

140b — 140a

141  12a  11b  14a  13a  14a

142  122

FIG. 10

21 24 17    25  17a    30 39 116  21 17b    23    17

104  24a        21 24        14

13  117

14    21 53    20 33

55

122  54    19

19    19

FIG. 11

FIG. 12

FIG. 15

FIG. 16

FIG. 17

FIG. 18

FIG. 19